# EUROPÄISCHE PATENTSCHRIFT

(11) **EP 0 507 072 B1**
(45) Veröffentlichungstag und Bekanntmachung des Hinweises auf die Patenterteilung: **27.08.1997**
(21) Anmeldenummer: 92103119.1
(22) Anmeldetag: 25.02.1992
(51) Int. Cl.: B60T 8/00

(54) **Elektronisches System für ein Fahrzeug**
Electronic system for a vehicle
Système électronique pour une voiture

(30) Priorität: 05.04.1991 DE 4111023
(43) Veröffentlichungstag der Anmeldung: 07.10.1992
(73) Patentinhaber: ROBERT BOSCH GMBH, 70442 Stuttgart (DE)
(72) Erfinder: Keller, Frieder, Dr. Dipl.-Ing., W-7518 Bretten (DE); Streib, Martin, Dr. Phys., W-7143 Vaihingen/Enz 6 (DE); Holzinger, Otto, Dr. Phys., W-7321 Eschenbach (DE); Leonhard, Rolf, Dr. Dr.-Ing., W-7141 Schwieberdingen (DE); Goelzer, Thomas, Dr. Phys., W-7141 Schwieberdingen (DE)

(56) Entgegenhaltungen:
- EP-A- 0 136 398
- EP-A- 0 216 372
- EP-A- 0 388 107
- 39 -IEEE VEHICULAR TECHNOLOGY CONFERENCE, Bd.1, 1. Mai 1989 Seiten 437 - 442, XP000076329 HARATA ET AL. 'A SIMPLIFIED SERIAL COMMUNICATION NETWORK WITHIN A VEHICLE'
- VEHICLE ELECTRONICS IN THE 90 S, Oktober 1990, USA Seiten 463 - 471, XP000223558 SCHMIDT ET AL. 'REQUIRED ELEMENTS OF INTEGRATED VEHICLE CONTROL SYSTEMS'

## Beschreibung

### Stand der Technik

Die Erfindung betrifft ein elektronisches System für ein Fahrzeug wie im unabhängigen Patentanspruch beschrieben.

Bereits heutige Fahrzeuge sind durch eine Vielzahl von elektronischen Systemen, wie elektronische Einspritz- und Zündungssteuerungen und/oder ABS-Systeme gekennzeichnet. Um die zukünftig sich noch weiter erhöhende Anforderungen an Umweltverträglichkeit, Verbrauch, Sicherheit und Komfort der Fahrzeuge erfüllen zu können, werden verstärkt weitere elektronische Systeme eingeführt. Dabei sind in erster Linie elektronische Leistungsregelung (E-Gas), Fahrgeschwindigkeitsregelung, ASR-Systeme und/oder elektronische Getriebesteuersysteme, aber auch Fahrwerksteuersysteme, Lenksysteme, inclusive elektronischer Hinterradlenkung, Abstandsregelsysteme, Navigationssysteme und/oder Verkehrsleitsysteme zu erwähnen.

Daher wird sich die Komplexität und die Anzahl der elektronischen Systeme in Fahrzeugen weiter erhöhen. Um jedoch eine zufriedenstellende Steuerung des Fahrzeuges zu erreichen, ist ein optimales Zusammenwirken der elektronischen Einzelsysteme notwendig. Diese Forderung führt schon heute, jedoch vermehrt in der Zukunft, zu Problemen. Durch die stark ansteigende Anzahl von Verknüpfungen zwischen den Einzelsystemen steigt die Komplexität des Kabelbaums, treten zunehmend Probleme bezüglich der elektromagnetischen Verträglichkeit und der Temperatur auf. Ferner spielen zunehmend Platzprobleme hinsichtlich der Unterbringung der Einzelsteuergeräte in den an aerodynamischen Gesichtspunkten orientierten Fahrzeugen eine Rolle. Die unabhängig voneinander durchgeführten Entwicklungen der einzelnen elektronischen Systeme und ihre notwendige Verknüpfung führt zu einer zunehmenden Komplexität der Entwicklungsaufgaben, was in einer höheren Entwicklungszeit für ein Fahrzeug resultiert. Ferner treten unter Umständen durch nicht erkannte Kopplungen zwischen den Einzelsystemen nachteilige Auswirkungen auf die Zuverlässigkeit, Sicherheit und Verfügbarkeit der Fahrzeuge auf.

Demgegenüber stehen Forderungen nach kürzerer Entwicklungszeit, höherer Zuverlässigkeit, Verfügbarkeit, Servicefreundlichkeit der Fahrzeuge. Es wird aber auch eine Optimierung der Gesamtheit der elektronischen Steuerung, d.h. eine Optimierung des gesamten Fahrer-Fahrzeug-System hinsichtlich Energieverbrauch, Umweltverträglichkeit, Leistungsvermögen, Komfort, d.h. eine Optimierung des Betriebsverhaltens des Fahrzeugs für verschiedene Fahrzeugmodelle und -arten gefordert.

Die bisherige Vorgehensweise auf der Basis von voneinander unabhängigen, vielfach untereinander verknüpften Einzelsystemen stößt wegen des Konfliktes zwischen den oben dargestellten Problemen und den Forderungen an zukünftige Steuersysteme an ihre Grenzen, insbesondere bezüglich der Beherrschbarkeit des Gesamtsystems. Mit der bisherigen Struktur der elektronischen Steuerung in einem Fahrzeug lassen sich weder die oben skizzierten Probleme lösen noch die zukünftigen Forderungen befriedigen.

Daher müssen Lösungen für elektronische Gesamtsysteme in Fahrzeugen gefunden werden, die die Forderungen nach kürzerer Entwicklungszeit, höherer Zuverlässigkeit, Verfügbarkeit und Servicefreundlichkeit der Fahrzeuge bei gleichzeitig verstärktem Einsatz elektronischer Systeme unter Optimierung des durch die Gesamtheit der elektrischen Systeme beeinflußten Betriebsverhaltens der Fahrzeuge erfüllen.

So wird beispielsweise in dem Aufsatz "Integrated Vehicle Control, Convergence 88, Seiten 97 bis 106" eine Steuerstruktur für ein Fahrzeug mit drei Hierarchieebenen ohne genauere Hinweise auf Informations- und Befehlsfluß und Schnittstellen vorgeschlagen. Die unterste Hierarchieebene stellen dabei die die Steuerfunktionen ausführenden Stelleinrichtungen dar, während eine zweite Hierarchieebene die einzelnen Steuerelemente des jeweiligen Untersystems des Fahrzeugs, wie Bremsen, Lenken, Antrieb, Fahrwerk etc. repräsentiert. Die oberste Hierarchieebene stellt einen Koordinator dar, welcher das Zusammenspiel der Einzelelemente abhängig vom Fahrerwunsch koordiniert.

Aus der Zeitschrift "Hitachi-Revue Vol. 39 (1990), Nr. 5, Seiten 307 bis 312" wird eine hierarchische Steuerstruktur für das Zusammenspiel von Getriebesteuerung und Drosselklappensteuerung vorgeschlagen. Ausgehend vom Fahrerwunsch, der über die Parameter Fahrpedalwinkel, Drehzahl und Fahrzeuggeschwindigkeit erfaßt wird, wird ein Sollwert für die Antriebskraft des Fahrzeuges ausgerechnet. Dieser Sollwert wird dann in eine entsprechende Steuerung der Drosselklappe und in eine Gangstellung umgesetzt.

Diese Vorgehensweise berücksichtigt lediglich ein Einzelproblem, die oben dargestellten Problemstellungen und Zielkonflikte hinsichtlich des gesamten Fahrzeugs lassen sich dagegen durch diese Maßnahmen nicht lösen.

Es ist daher Aufgabe der Erfindung, ein elektronisches System für ein Fahrzeug anzugeben, welches eine Verkürzung der Entwicklungszeit, eine Erhöhung der Zuverlässigkeit, Verfügbarkeit und Servicefreundlichkeit der Fahrzeuge ermöglicht.

Dies wird durch die Merkmale des unabhängigen Patentanspruchs erreicht.

Aus den Veröffentlichungen "Required Elements of Integrated Vehicle Control Systems" von Schmidt et.al., Vehicle Electronics in the 90*'*s, Oktober 1990, USA, Seiten 463-471 und "A Simplified Serial Communication Network within a Vehicle", von Harata et.al., 39-IEEE Vehicular Technology Conference, Band 1, 1. Mai 1989, Seiten 437-442, sind Steuersysteme für Fahrzeuge bekannt, bei welchen hierarchische Netzwerkstrukturen und Aufteilungen des Steuersystems in einzelne Untersysteme unterschiedlicher Hierarchieebenen vorgeschlagen werden. Konkrete Angaben über Befehlsfluß und Schnittstellendefinitionen werden nicht gegeben.

Aus der DE-OS 39 30 445 ist ein elektronisches System zur Lenkungssteuerung bekannt. Dort wird der Lenkeinschlag der Räder in Abhängigkeit des Lenkwinkels und einem Sollwert für die Giergeschwindigkeit des Fahrzeuges eingestellt.

Aus der Veröffentlichung SAE-Paper 881770 "Development of Electronically Controlled Air Suspension System", SAE, 1988, ist ein elektronisches System zur Fahrwerksregelung bekannt, welches abhängig von der Fahrzeugbeschleunigung bzw. -verzögerung, vom Lenkwinkel und/oder von einem betätigbaren Schalter auf das Feder/Dämpfer-System eines Fahrzeugs einwirkt, d.h. abhängig von diesen Betriebszuständen die Radlast einstellt.

Aus der DE-OS 32 26 074 (US-PS 4 606 586) ist ein elektronisches Bremsregelsystem mit ABS-Funktion bekannt. Abhängig von der Stellung des Fahrpedals und der daraus abgeleiteten gewünschten Verzögerung des Fahrzeuges wird die Bremskraft auf die Räder geregelt eingestellt.

Elektronisch steuerbare Getriebe sind beispielsweise aus "Bosch, Kraftfahrtechnisches Handbuch, Seite 472 bis 473" bekannt. Dort wird abhängig von der eingestellten Fahrstufe, der Motordrehzahl, der Fahrpedalstellung etc. die Übersetzung des Getriebes sowie der Schaltzustand einer Wandlerkupplung eingestellt.

Aus der DE-OS 25 54 775 ist ein Bussystem zur Vernüpfung mehrerer Steuerelemente, die auf einen gemeinsamen Speicherbereich zugreifen, bekannt.

### Vorteile der Erfindung

Mit Hilfe der erfindungsgemäßen Vorgehensweisen lassen sich die oben genannten Problemstellungen bzw. Zielkonflikte lösen.

Die hierarchische Struktur des Gesamtsystems erlaubt einen Befehlsweg nur von oben nach unten. In dieser Richtung werden die Befehle zur Ausführung des Fahrerwunsches weitergeleitet. Dadurch ergibt sich eine übersichtliche Struktur mit voneinander unabhängigen Elementen. Die Verknüpfung der Einzelsysteme wird auf ein vertretbares Maß reduziert.

Die Unabhängigkeit der einzelnen Elemente voneinander gewährleistet eine parallele gleichzeitige Entwicklung dieser einzelnen Elemente. Dadurch kann jedes Element für sich einer vorgegebenen Strategie folgend entwickelt werden. Lediglich eine geringe Zahl von Schnittstelle zu einer höheren und wenige Schnittstellen zu einer niedereren Hierarchiebene sind zu berücksichtigen. Dies ermöglicht eine ganzheitliche Optimierung des Fahrer-Fahrzeug-Systems hinsichtlich den Erfordernissen bezüglich Kraftstoffverbrauch, Umweltverträglichkeit, Sicherheit und Komfort.

Die an den physikalischen Gegebenheiten des Fahrzeugs orientierten Schnittstellen zwischen den Hierarchieebenen erlauben die Integration weiterer elektronischer Elemente bzw. Systeme in das bestehende Gesamtsystem, da diese weiteren Systeme für sich entwickelt und lediglich unter Beachtung der Schnittstelle in eine Hierarchieebene eingegliedert werden können. Dies führt auch zu einer flexiblen Handhabung von Änderungen und Anpassungen an verschiedene Fahrzeugmodelle bzw. -typen. Der Einbau beispielsweise eines anderen Getriebes führt lediglich zu einer Änderung in dem das Getriebe steuernde Element. Die anderen Elemente des Gesamtsystems werden von der Änderung nicht betroffen. Ferner vereinfacht die geeignete Wahl der Schnittstelle die Darstellung übergeordneter Funktionen.

Die Schnittstellenwahl ist demnach besonders vorteilhaft, wenn sie sich an Teilsystemen des Fahrer-Fahrzeug-Systems orientiert, wie Motor (Motorleistung), Abtrieb (Motor und Getriebe), Radantrieb (Antrieb und Bremse), Fahrdynamik (Dynamik der Fortbewegung und/oder Lenkung und/oder Fahrwerk) oder Fahrerwunsch. Damit lassen sich Hierarchieebenen bezüglich Motor, Abtrieb, Radantrieb, Fahrzeug und/oder Fahrer-Fahrzeug-System bilden.

Diese Vorteile können durch eine geeignete schaltungstechnische Realisierung mittels eines Master-Controllers noch verstärkt werden. Durch die Verwendung eines mit den Einzelelementen über Bussysteme verbundenen Master-Controllers können die verteilten Steuergeräte wie bisher beibehalten werden.

Im Master-Controller sind dann in vorteilhafter Weise systemübergreifende Funktionen z.B. in Hochsprache programmierbar, die ohne Eingriff in die Einzelelemente geändert bzw. entwickelt werden können. Ferner kann der Master als Diagnoseschnittstelle oder als Recheneinheit für einfacher gestaltete Einzelelemente verwendet werden, wobei diese Einzelelemente dann direkt vor Ort an der die durchzuführende Steuerfunktion ausführenden Einheit angebracht werden. Dadurch ergibt sich eine überschaubare Konstruktion sowie Testbarkeit der Einzelelemente. Die Einzelelemente können dann weiterhin zeitlich parallel zueinander unabhängig voneinander entwickelt werden. Dadurch kann die Entwicklungszeit für ein Gesamtsystem auch bezüglich der Anpassung an andere Fahrzeugtypen wirksam reduziert werden.

Einen weiteren Vorteil stellt die Verwendung eines Master-Controllers dar, der über ein Gateway verfügt und an dem mehrere Bussysteme mit unterschiedlichen Übertragungsgeschwindigkeiten beispielsweise für die Fahrzeugelektronik (Beleuchtung, Sitzverstellung, etc.) oder für Telekommunikationssysteme angeschlossen werden.

Alles in allem verkürzt die erfindungsgemäße Vorgehensweise die Entwicklungszeiten eines Systems und verbessert Zuverlässigkeit, Verfügbarkeit, Servicefreundlichkeit und Applizierbarkeit der Systeme.

Weitere Vorteile ergeben sich aus der nachfolgenden Beschreibung von Ausführungsformen und den Unteransprüchen.

### Zeichnung

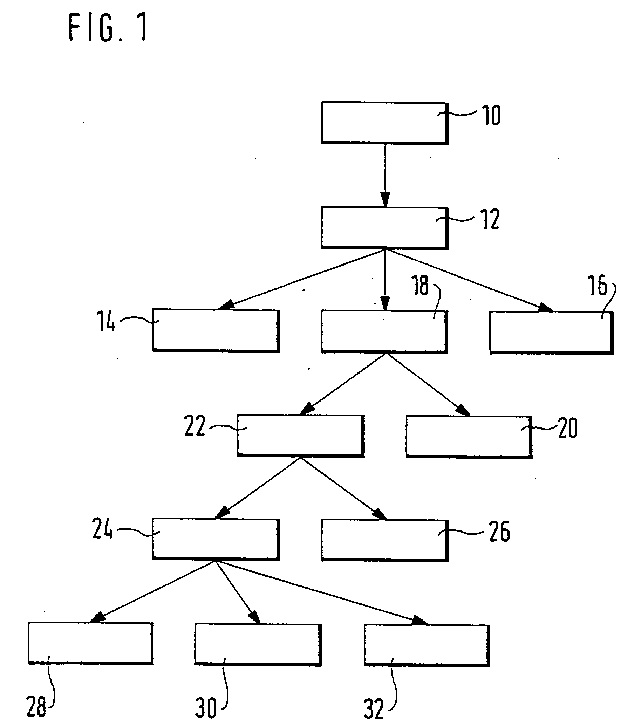

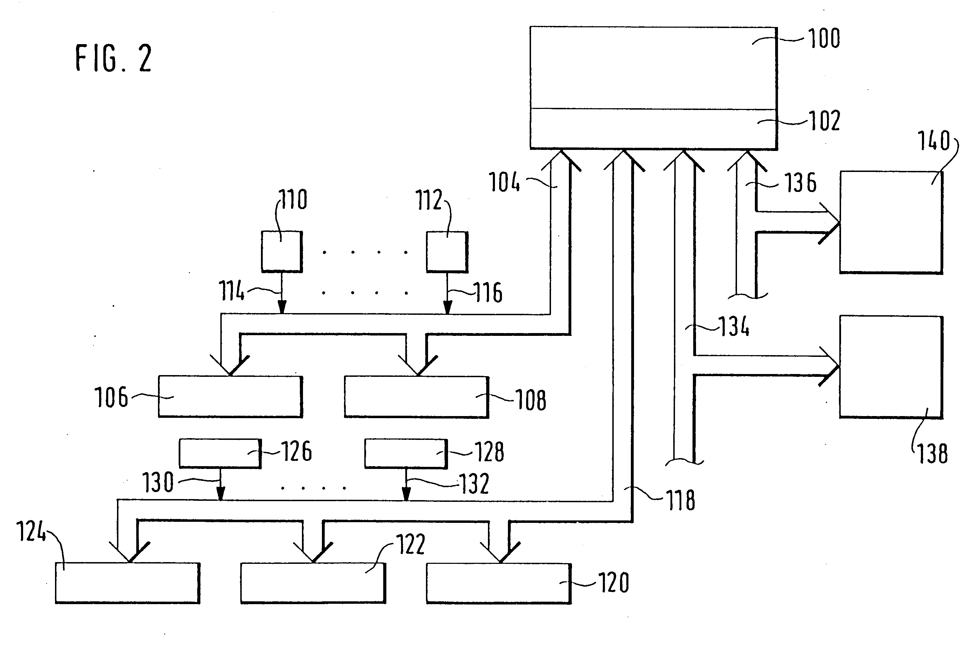

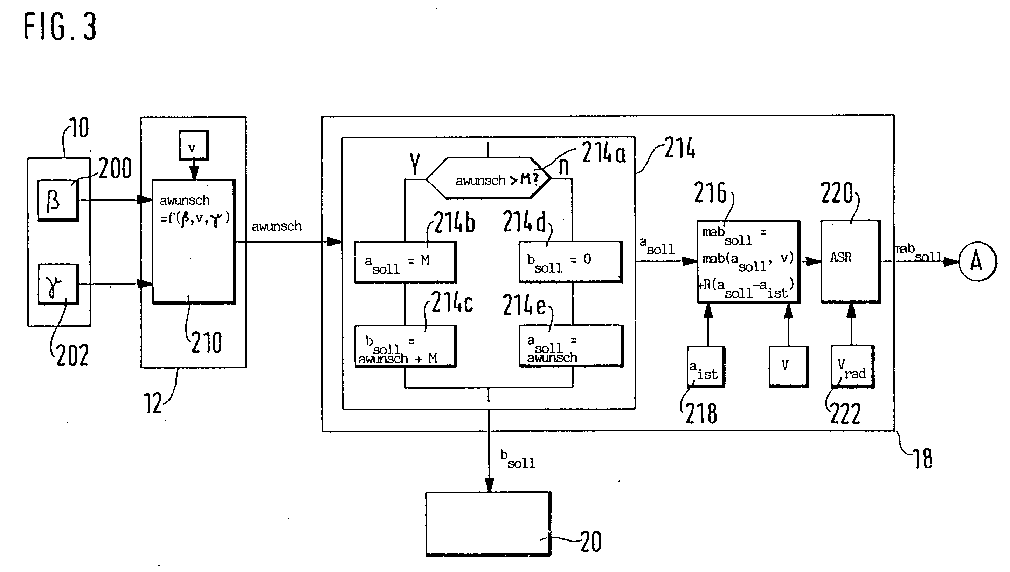

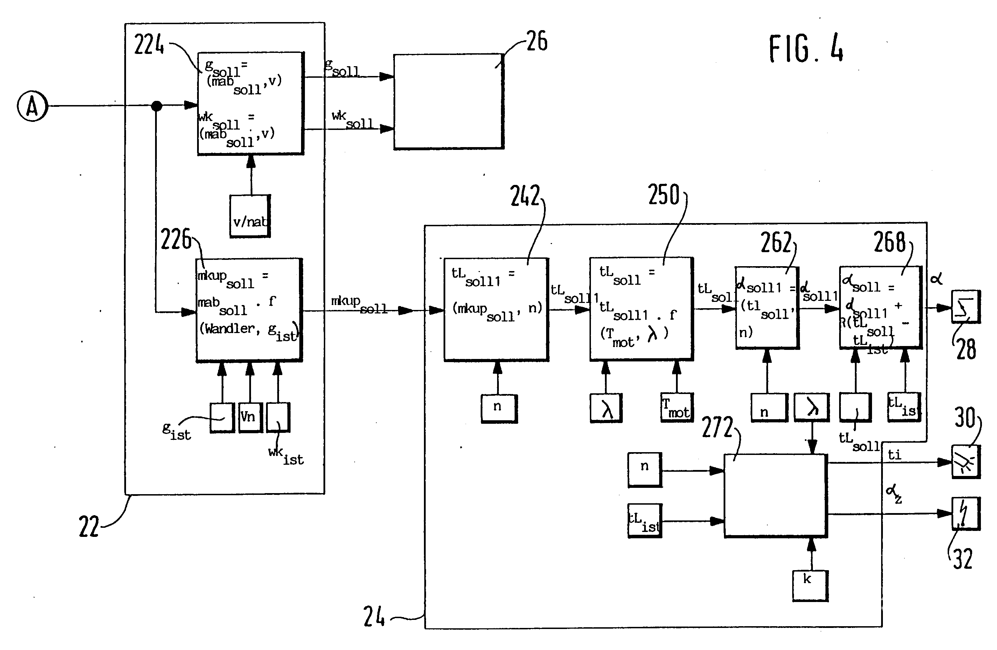

Die Erfindung ist nachstehend anhand der in der Zeichnung dargestellten Ausführungsformen erläutert. Figur 1 zeigt ein in verschiedenen Hierarchieebenen angeordnetes elektronisches System für ein Fahrzeug, dessen Schnittstellen an den physikalischen Gegebenheiten des Fahrer-Fahrzeug-Systems orientiert sind. Figur 2 zeigt beispielhaft einen Vorschlag zur Realisierung dieses elektronischen Systems als Blockschaltbild, während Figur 3 und 4 ein vorteilhaftes Ausführungsbeispiel in vereinfachter Form des in Figur 1 dargestellten elektronischen Systems beschreibt.

### Beschreibung von Ausführungsformen

In Figur 1 ist mit 10 der Fahrer eines Fahrzeugs und damit die höchste Hierarchieebene dargestellt.

Der im Element 10 erfaßte Fahrerwunsch wird an die zweite Hierarchieebene, an das Element 12 abgegeben. Dieses setzt den Fahrerwunsch in Signale zur Beeinflussung der Fahrdynamik des Fahrzeugs entsprechend dem Fahrerwunsch um. Im Element 12 wird also der Fahrerwunsch interpretiert bzw. ausgewertet mit Blick auf eine gewünschte Fahrdynamik, d.h. z.B. Lenkung, Fahrwerkverhalten und Dynamik der Fortbewegung (Beschleunigung, Verzögerung). Er repräsentiert daher das Fahrer-Fahrzeug-System.

Element 12 überträgt Sollwerte bezüglich dieser Teilsysteme an die dritte Hierarchieebene, welche das Teilsystem bzw. Untersystem Fahrzeug repräsentiert. Dort ist ein Element 14 vorgesehen, welches die Lenkungseingriffe darstellt, ein Element 16, das die Eingriffe in das elektronisch steuerbare Fahrwerk des Fahrzeugs vornimmt sowie ein Element 18, welches auf die Dynamik der Fortbewegung, d.h. den Radantrieb des Fahrzeugs, einwirkt.

Das Element 18 gibt Befehle an die vierte Hierarchieebene zur Beeinflussung der Dynamik der Fortbewegung des Fahrzeugs ab, die aus Element 20, das das Bremssystem des Fahrzeugs darstellt und Element 22, welches die Abtriebs- bzw. Ausgangsleistung des Fahrzeuges bereitstellt, besteht.

Vom Element 22 abhängig ist die fünfte Hierarchieebene zur Bereitstellung der gewünschten Abtriebsleistung, die die Elemente 24 und 26 umfaßt. Element 26 repräsentiert dabei den Eingriff in ein elektrisch steuerbares Getriebe des Fahrzeugs, während das Element 24 die Koordination der Motoreingriffe übernimmt.

Die sechste Hierarchieebene, die dem Element 24 untergeordnet ist, bezeichnet schließlich die möglichen Motoreingriffe, wie Füllung, d.h. Lufteingriff, Einspritzung und/oder Zündung (Elemente 28, 30, 32).

Der Fahrer 10 hat in einem konventionellen Fahrzeug die Möglichkeit, das Fahrzeug über Auslenkung eines Fahrpedals zu beschleunigen, durch Betätigung eines Bremspedals abzubremsen und durch Drehen des Lenkrades zu steuern. Ferner können Einflußmöglichkeiten über Betätigungstasten eines Fahrgeschwindigkeitsreglers, durch Einstellen eines bestimmten Fahrwerkverhaltens oder eines bestimmten Fahrwerkzustandes vorgesehen sein. Im erfindungsgemäßen Zusammenhang kann der Fahrer jedoch auch allgemeiner in Form eines Navigations- bzw. Verkehrsleitsystems oder einer Abstandsregelung, die entsprechende Befehle wie Bremsen, Beschleunigen, Lenken etc. vorgeben, gesehen werden.

Diese vom Fahrer abgebbaren Befehle werden von entsprechenden Meßeinrichtungen, beispielsweise über Stellungssensoren für Fahrpedal Bremse und/oder Lenkrad, erfaßt und an die zweite Hierarchieebene, an das Element 12, abgegeben. Dieses bestimmt aus den eingegangenen Informationen einen Lenkwinkel und gegebenenfalls eine gewünschte Giergeschwindigkeit des Fahrzeugs für das Lenkungselement 14, das wie im eingangs genannten Stand der Technik die Lenkbewegungen der Räder steuert und ausführt. Der Lenkwinkel wird dabei in erster Linie von der Lenkradstellung abgeleitet. Ferner übermittelt das Element 12 an das das Fahrwerk im Sinne des eingangs genannten Stand der Technik steuernde Element 16 die vom Fahrer gewünschte Einstellung der Radlast. Diese kann von der gewünschten Beschleunigung und/oder von einem entsprechenden vom Fahrer betätigbaren Wahlschalter abgeleitet werden.

Ferner ermittelt das Element 12 aus der Fahrpedalbetätigung bzw. der Bremspedalbetätigung die vom Fahrer gewünschte Beschleunigung positiver und/oder negativer Natur des Fahrzeugs und gibt diese an das den Radantrieb des Fahrzeugs beeinflussende Element 18 "Triebstrang und Bremse" ab.

Anstelle einer gewünschten Beschleunigung des Fahrzeugs kann das Element 12 auch die zur Durchführung des Fahrerwunsches gewünschten, auf die einzelnen Rädern zu übertragenden Radmomente an das Element 18 übermitteln.

Das Element 18 ermittelt aus der ihm zugehenden Informationen über den Fahrerwunsch bezüglich des Radantriebs des Fahrzeugs die Verzögerung bei einer Bremsbetätigung bzw. die auf die einzelnen Räder aufzubringenden Radbremsmomente im Falle eines Bremsvorgangs oder im Falle einer Beschleunigung bzw. einer gleichmäßigen Fahrweise das vom Antriebsstrang aufzubringen Abtriebsmoment. Die Radbremsmomente bzw. die gewünschte Verzögerung gibt das Element 18 an das das Bremssystem gemäß dem eingangs genannten Stand der Technik repräsentierende Element 20 ab, das den Bremsvorgang entsprechend seiner Eingangsinformation ausführt.

Die ermittelten Größen des gewünschten Abtriebsmomentes werden vom Element 18 an das den Triebsstrang darstellende Element 22 abgegeben. Dort wird das gewünschte Abtriebsmoment einerseits in ein Motormoment, andererseits in eine Getriebeübersetzung umgewandelt. Die ermittelte Getriebeübersetzung wird dabei an das die Getriebesteuerung gemäß des eingangs genannten Standes der Technik repräsentierenden Elements 26 abgegeben, während der Motormomentwert an das Element 24, welches die Motorsteuerung darstellt, weitergeleitet wird.

Gemeinsam betrachtet wird somit das gewünschte Abtriebsmoment von der vierten Hierarchieebene durch das Element 22 als eine Kombination einer Sollgetriebeübersetzung und einem Sollmotormoment bereitgestellt. Die Wahl der Ausführung kann dann nach einer vorgegebenen Strategie, z.B. minimaler Energieverbrauch, vorgenommen werden.

Das vom Motor geforderte Motormoment wird vom Element 24, der Motorsteuerung durch entsprechende Wahl der Motorleistungsparameter Kraftstoffzufuhr, Zündzeitpunkt und/oder Luftzufuhr bereitgestellt. Entsprechende Steuerungswerte werden an die Elemente 28 für die Luftzufuhr, 30 für die Einspritzung und 32 für die Zündung abgegeben, die dann jeweils die ihnen zugeführten Sollwerte an der Drosselklappe, den Einspritzventilen und der Zündeinstellung einstellen.

Diese hierarchische Struktur eines elektronischen Systems für ein Fahrzeug zeigt die eingangs beschriebenen Vorteile. Die einzelnen Elemente können weiterhin unabhängig voneinander unter Berücksichtigung nur weniger Schnittstellen nach einer bestimmten Strategie, z.B. günstigen Verbrauchswerten, etc., entwickelt werden. Übergeordnete Funktion können dabei auch unabhängig von den anderen Elementen entworfen werden. Die Anpassung des Gesamtsystems an anderen Fahrzeugtypen und/oder Fahrzeugteiletypen läßt sich durch Änderungen der betroffenen Elemente realisieren, ohne in nicht betroffene Elemente eingreifen zu müssen. Dies unterstützt auch die Servicefreundlichkeit des Fahrzeugs, da jedes Element abgegrenzte Aufgaben zu erfüllen hat.

Zum besseren Verständnis seien kurz die Unterschiede des erfindungsgemäßen elektronischen Systems zu herkömmlichen am Beispiel einer ASR-Funktion, die auf die Leistungsparameter des Motors wirkt, dargestellt.

Bei herkömmlichen Systemen wird, wenn das ASR-Steuergerät einen zu großen Radschlupf erkennt, von diesem direkt in die Füllung, Einspritzung und/oder Zündung zur Reduzierung der Antriebsleistung eingegriffen. Dies erfordert auf der einen Seite im ASR-Steuergerät eine Darstellung von Motorsteuerungsfunktionen zur Ermittlung der Größe des zu reduzierenden Parameters, auf der anderen Seite im Motorsteuerungssystem entsprechende Schnittstellen, insbesondere zu anderen Systemen zur Koordination des ASR-Eingriffs.

Das erfindungsgemäße elektronische System verfügt über ein Element "Triebstrang und Bremse" (Element 18), das aus der aus dem Fahrerwunsch abgeleiteten Beschleunigung des Fahrzeugs ein Abtriebsmoment berechnet. Dieses Abtriebsmoment wird an das Element "Motor und Getriebe" abgegeben, dem es überlassen bleibt, das gewünschte Abtriebsmoment bereitzustellen. Dadurch werden Eingriffe einer ASR-Funktion in die Motorsteuerung selbst vermieden. Das Element 18 "Triebstrang und Bremse" enthält lediglich ein einfaches Modell der Motorsteuerung.

Der oben genannte ASR-Eingriff findet somit bei durchdrehenden Antriebsrädern durch den Befehl des Elements 18 an das Element 22, "reduziere Abtriebsmoment", statt. Dieses wählt entsprechend dem geforderten Wert des Abtriebsmoments eine entsprechende Getriebeübersetzung und ein entsprechendes Motormoment, welches beispielsweise bezüglich des Kraftstoffverbrauches oder der Umweltverträglichkeit eine optimale Konstellation darstellt. Die an die Elemente 24 und 26 übermittelten Größen werden von diesen bzw. den Elementen 28 bis 32 unter dem Gesichtspunkt einer schnellen Reaktion, eines minimalen Kraftstoffverbrauches, etc. am Motor bzw. Getriebe eingestellt.

Aus den vorstehenden Angaben ist ersichtlich, daß die Wahl der einzelnen Elemente und Hierarchieebenen entsprechend den physikalischen Schnittstellen eines Fahrzeugs, d.h. der Außenwirkung der mechanischen Teilsysteme zu erfolgen hat. Beispielsweise stellt sich als wichtigste Aufgabe eines Motors die Bereitstellung eines Motormoments bzw. eines Antriebsmoments an der zwischen Motor und Getriebe angeordneten Kupplung dar. Der Parameter Motormoment ist deshalb eine geeignete Schnittstellenbeschreibung zum übergeordneten Element "Motor und Getriebe". Vergleichbaren Gedanken liegt die Bestimmung der anderen, oben beschriebenen Schnittstellen zwischen den Einzelelementen zugrunde.

Andere an der Außenwirkung anderer Teilsysteme des Fahrzeug orientierte Schnittstellendefinitionen können jedoch in anderen Ausführungsbeispielen mit gleichem Erfolg realisiert werden.

Zur Ausführung der jeweiligen Funktionen durch die einzelnen Elemente werden Betriebsgrößen des Fahrzeugs, des Motors und/oder der Fahrzeugumgebung benötigt. Diese werden von entsprechenden Meßeinrichtungen dem Gesamtsystem zugeführt und von den einzelnen Elementen verwertet.

In einem vorteilhaften Ausführungsbeispiel kann auch auf die Elemente 14 und 16 verzichtet werden.

Figur 2 stellt ein Hardeware-Blockschaltbild dar, in dem das oben geschilderte elektronische System in vorteilhafter Weise realisiert werden kann.

In Anlehnung an das in Figur 1 dargestellte System ist mit 100 ein Master-Controller bezeichnet, der u.a. ein Interface 102 (Gateway) umfaßt, an dem verschiedene Bussysteme angeschlossen sind. Die Aufteilung dieser Bussysteme ist dabei beispielhaft. Das erste Bussystem 104 stellt die Kommunikation zwischen dem Master 100 und den das Abtriebsmoment steuernden Elementen her. Der Bus 104 verbindet den Master 100 mit einem Steuergerät 106 zur Motorsteuerung und einem Steuergerät 108 zur Getriebesteuerung. Andererseits ist der Bus 104 über entsprechende Leitungen 114 bis 116 mit Meßeinrichtungen 110 bis 112 verbunden. Diese Meßeinrichtungen 110 bis 112 erfassen die zur Steuerung des Abtriebsmoment auszuwertenden Betriebsgrößen des Motors und/oder des Fahrzeugs, beispielsweise Fahrgeschwindigkeit, Drehzahl, zugeführte Luftmenge bzw. -masse, Last, Abgaszusammensetzung, Motortemperatur, Getriebeübersetzung, Schaltzustand des Wandlers, Klopfneigung. etc.

Ein zweiter Bus 118 verbindet den Master-Controller 100 bzw. sein Interface 102 mit Elementen zur Bremssteuerung 120, Lenkung 122 und/oder zur Fahrwerksregelung 124. Analog zum oben gesagten, werden von den Meßeinrichtungen 126 bis 128 über entsprechende Verbindungsleitungen 130 bis 132 dem Bus 118 Betriebsgrößen des Motors und/oder des Fahrzeugs, wie Raddrehzahlen, Feder/Dämpfer-Wege, Bremskraft, etc. zugeführt.

Ferner können weitere Bussysteme 134 und 136 vorgesehen sein, die mit einer anderen Übertragungsrate als die Systeme 104 und 118 arbeiten. Diese Bussysteme können den Master-Controller 100 mit Geräten 138 der Fahrzeugelektrik (Licht, Sitzverstellung, etc.) am Bus 136 mit geringerer Übertragungsrate und mit Geräten 140 zur Telekommunikation am Bus 136 mit höheren Übertragungsrate verknüpfen.

In diesem Ausführungsbeispiel entsprechen die einzelnen ausführenden Elemente 14, 16, 20, 26 und 28 bis 32 von Figur 1 den an den Bussen angeschlossenen Steuergeräten 106, 108, 120, 122 und 124. Diese können in einer vereinfachten Form direkt an den mechanischen Stellgliedern angeordnet sein. Die Steuerfunktion, insbesondere die der Koordinationselemente 12, 18 und 24 sind dann als Programmstruktur im Master-Controller 100 realisiert. Dieser kann auch als externer Rechenbereich der Elemente 106, 108 etc. dienen (CPU-Server). Wichtig dabei ist, daß der Master-Controller 100 selbst keine Sensor- und Stelleranschlüsse besitzt. Als zentraler Rechner des elektronischen Systems kann er in einem vorteilhaften Ausführungsbeispiel als Diagnosespeicher und Diagnoseschnittstelle des Fahrzeugs dienen.

Diese Maßnahmen haben vorteilhafte Wirkungen bezüglich Servicefreundlichkeit, platzsparender Unterbringung, Testbarkeit, etc.

Anhand der Figuren 3 und 4 wird ein vorteilhaftes Ausführungsbeispiel eines elektronischen Systems für ein Fahrzeug auf der Basis des Systems nach Figur 1 in vereinfachter Form vorgestellt.

In Figur 3 und 4 sind die in Figur 1 dargestellten Elemente mit denselben Bezugszeichen bezeichnet. Die zur Durchführung der einzelnen Schritte auszuwertende Betriebsgrößen werden über den Bus bereitgestellt, der mit den entsprechenden Meßeinrichtungen verbunden ist. Dies wird in Figur 3 und 4 symbolisch anhand von Meßeinrichtungen, die mit einem die Betriebsgröße kennzeichnenden Symbol beschriftet sind, und Verbindungsleitungen dargestellt.

In Figur 3 ist das anhand Figur 1 als Fahrer bezeichnete Element 10 in Form von Meßeinrichtungen für die Fahrpedalstellung und die Bremspedalstellung (200, 202) dargestellt. Die dort erfaßten Informationen über die Stellung des Fahrpedals und/oder des Bremspedals wird an das Element 12 zur Interpretation des Fahrerwunsches und zur Festlegung der Fahrdynamik übermittelt. Ferner wird ein Fahrgeschwindigkeitssignal des Fahrzeugs berücksichtigt.

Das Element 12 besteht im wesentlichen aus einem Kennfeld, welches in Figur 3 als Funktionseinheit 210 dargestellt ist. Mit Hilfe des Kennfeldes 210 wird aus den Eingangssignalen Fahrpedalstellung β, Fahrgeschwindigkeit v und/oder Bremspedalstellung γ der vom Fahrer im momentanen Fahrzustand gewünschte Beschleunigungswert ("awunsch") des Fahrzeugs positiver und/oder negativer Natur bestimmt. Durch geeignete Festlegung des Kennfeldes kann in einem Ausführungsbeispiel ein verbrauchsoptimales Betriebsverhalten des Fahrzeugs vorgegeben werden, in einem anderen Ausführungsbeispiel durch entsprechende Wahl der Kennfeldparameter ein sportliches Betriebsverhalten. Das Kennfeld 210 kann in einem vorteilhaften Ausführungsbeispiel eine lineare Abhängigkeit zwischen Fahrpedalstellung und gewünschtem Beschleunigungswert ("awunsch") zeigen. Dabei ist zu berücksichtigen, daß Achsenabschnitt und Steigung dieser Geraden von der momentan gefahrenen Geschwindigkeit abhängen. D.h. für eine Geschwindigkeit von 0 ist die Steigung der Geraden größer als für eine Geschwindigkeit > 0, während bei höheren Geschwindigkeiten ein Pedalwert 0, d.h. ein losgelassenes Fahrpedal, einer negativen Beschleunigung entspricht. Eine Auslenkung des Fahrpedals um einen vorgegebenen Betrag führt somit bei niedrigeren Geschwindigkeiten zu einem größeren Beschleunigungswert ("awunsch") als bei hohen. Bei Höchstgeschwindigkeit ist "awunsch" < = 0. Ferner kann in das Kennfeld 210 in einem vorteilhaften Ausführungsbeispiel ein die Stellung des Bremspedals repräsentierender Wert miteinbezogen werden. Dabei ist in der einfachsten Ausführungsform die Stellung des Bremspedals direkt proportional zu "awunsch". Analog zum Vorangegangenen kann auch hier eine Geschwindigkeitsabhängigkeit vorgesehen sein.

Der aus dem Kennfeld 210 ermittelte Beschleunigungswunsch des Fahrers wird über die Verbindung 212 an das Element 18 "Triebstrang und Bremse" abgegeben und in einen Beschleunigungssollwert (aₛₒₗₗ) oder Verzögerungssollwert (bₛₒₗₗ) umgesetzt.

Im Element 18 wird durch das Flußdiagramm in der Funktionseinheit 214 überprüft, ob ein Beschleunigungs- oder Verzögerungswunsch des Fahrers vorliegt und ob ein Bremseingriff durchgeführt werden soll (Abfrageschritt 214a). Ist der Beschleunigungswunsch "awunsch" kleiner als das Motorschleppmoment (M), d.h. die Motorbremswirkung im entsprechenden Betriebszustand, d.h. wünscht der Fahrer eine Verzögerung, die nur durch Bremsen erreichbar ist, so wird im Schritt 214b der Beschleunigungssollwert aₛₒₗₗ gleich dem in einer Tabelle abgelegtem Motorschleppmoment (M) gesetzt und im Schritt 214c ein Bremsverzögerungssollwert bₛₒₗₗ als Summe des (negativen) Beschleunigungswunsches und des Motorschleppmomentwertes bestimmt und an das Bremssystem 20 abgegeben. Im anderen Fall bei gegenüber dem Motorschleppmoment größerem Beschleunigungswunsch wird (bₛₒₗₗ) im Schritt 214d gleich Null gesetzt und gemäß Schritt 214e der Beschleunigungssollwert aₛₒₗₗ auf den Wert von "awunsch" gesetzt und an die nachfolgenden Funktionseinheit 216 abgegeben.

Dort wird der Beschleunigungssollwert aₛₒₗₗ in einen Abtriebsmomentssollwert für die nachfolgende Hierarchieebene umgerechnet. Dazu wird von einer entsprechenden Berechnungseinheit 218, beispielsweise anhand der Fahrgeschwindigkeit oder über einen Beschleunigungssensor die Istbeschleunigung (aᵢₛₜ) des Fahrzeugs errechnet bzw. erfaßt und der Funktionseinheit 216 zugeführt. Ferner wird in der Funktionseinheit 216 die Fahrgeschwindigkeit (v) verarbeitet. Der Sollwert des Abtriebsmomentes (mabsoll) ergibt sich durch ein in Abhängigkeit der Fahrgeschwindigkeit und des Beschleunigungssollwerts aus einem im einfachsten Fall linearen Kennfeld abgelesenen Grundwert [m (aₛₒₗₗ, v)] und einer additiven, aus der Differenz zwischen Soll- und Istwert der Beschleunigung gebildeten Komponente [R (aₛₒₗₗ - aᵢₛₜ)]. Der Zusammenhang zwischen Grundabtriebsmoment und Beschleunigungssollwert ist in erster Näherung linear, wobei die Gerade mit steigender Geschwindigkeit parallel in Richtung höherer Momente verschoben wird. Die Geraden sind dabei derart ausgestaltet, daß das errechnete Grundabtriebsmoment zur Einhaltung der vorgegebenen Beschleunigung gerade ausreicht. Der additive Korrekturterm dient dazu, das Abtriebsmoment zum Ausgleich wechselnder Fahrwiderstände (wie Wind, Beladung, Steigung) zu erhöhen, um die geforderte Beschleunigung zu erreichen, während er bei aₛₒₗₗ = aᵢₛₜ 0 ist.

Das auf diese Weise berechnete Abtriebssollmoment wird an die Funktionseinheit 220 übermittelt und einer ASR-Begrenzung unterzogen, die bei Schlupfneigung der Räder, die durch Einlesen der Radgeschwindigkeiten über die Berechnungseinheit 222 erkannt wird, das Abtriebsmoment auf einen schlupfabhängigen Wert begrenzt.

Im nachfolgenden Element 22 "Motor und Getriebe", das in Figur 4 dargestellt ist, wird das im Element 18 ermittelte Abtriebssollmoment in eine Getriebeübersetzung und in ein Motorsollmoment bzw. Sollkupplungsmoment, d.h. das Drehmoment, das motorseitig an der zwischen Getriebe und Motor befindlichen Kupplung auftritt, umgewandelt. Das folgende Beispiel betrifft ein elektronisch steuerbares Stufengetriebe mit elektrisch betätigbarer Wandlerkupplung oder Wandlerüberbrückungskupplung.

Das ermittelte Sollabtriebsmoment wird zum einen im Element 22 auf einen Funktionsblock 224 zur Bestimmung einer Sollgetriebeübersetzung (gₛₒₗₗ) und einem Sollzustand der Wandlerkupplung (wkₛₒₗₗ) (offen oder geschlossen) des aus dem Stand der Technik bekannten Getriebesystemes 26 über entsprechende Kennfelder umgesetzt, zum anderen auf den Funktionsblock 226 geführt, der die Umwandlung des Sollabtriebsmoments in einen Sollwert des Kupplungsmomentes, d.h. des Motormomentes, vornimmt.

Zur Umsetzung des Abtriebssollmoments in eine gewünschte Getriebeübersetzung wird in der Funktionseinheit 224 ein fahrgeschwindigkeits- oder abtriebsdrehzahlabhängiges Kennfeld verwendet (Abtriebsdrehzahl nab). Der Sollwert der Getriebeübersetzung (gₛₒₗₗ) wird durch Vergleich des Abtriebssollmoments mit einem vorgegebenen Referenzwert des Abtriebsmoment bei der jeweiligen Fahrgeschwindigkeit (v) bzw. Abtriebsdrehzahl (nab) gebildet. Eine Hochschaltung des Getriebes vom ersten in den zweiten Gang wird beispielsweise vorgenommen, wenn das Abtriebssollmoment in einem Abtriebsdrehzahlbereich beginnend von einer unteren Abtriebsdrehzahl im Bereich von 500/min bis ca. 2.000/min einen in diesem Abtriebsdrehzahlbereich steigenden Referenzwert unterschreitet. Analog findet eine Hochschaltung vom zweiten in den dritten und vom dritten in den vierten usw. statt, wobei der zu betrachtende Abtriebsdrehzahlbereich betragsmäßig steigt. Anstelle der Abtriebsdrehzahl kann auch in einem anderen Ausführungsbeispiel die Motordrehzahl verwendet werden.

Eine Rückschaltung beispielsweise vom zweiten in den ersten Gang erfolgt dann, wenn das Abtriebssollmoment bei einer bestimmten Abtriebsdrehzahl (nab) bzw. Fahrgeschwindigkeit (v) größer als ein vorgegebener Referenzwert ist. In einfacher Ausführungsform sind die Abtriebsdrehzahlbereiche für die Rückschaltung von einer in die jeweils nächste Gangstufe gleich denen bei der Hochschaltung, wobei die Referenzwerte für die Rückschaltung betragsmäßig größer sind als für die Hochschaltung (Hysterese).

Wird eine entsprechende Konstellation zwischen Abtriebssollwert und Referenzwert bei der jeweiligen Abtriebsdrehzahl bzw. Fahrgeschwindigkeit erkannt, so wird durch die Vorgabe der gewünschten Getriebeübersetzung (gₛₒₗₗ) an das Getriebesystem 26 der Gangwechsel ausgelöst.

Analog wird mit der im Getriebe vorgesehenen Wandlerkupplung verfahren, die zwei Schaltzustände kennt, offen und geschlossen. Ist das Motorabtriebssollmoment in der jeweiligen Gangstufe größer als ein vorgegebener Referenzwert, so wird die Kupplung geöffnet, ist der Sollwert des Motorabtriebsmomentes jedoch kleiner als der Referenzwert, wird die Kupplung geschlossen. Die Referenzwerte sind dabei wie oben dargestellt in einem vorgegebenen Abtriebsdrehzahlbereich abtriebsdrehzahlabhängig und steigen in der Regel mit steigender Abtriebsdrehzahl, wobei der Drehzahlbereich mit höherer Gangstufe ansteigt. Die Referenzwerte für die Öffnung der Wandlerkupplung sind für die jeweilige Drehzahl bzw. Fahrgeschwindigkeit betragsmäßig größer als der Referenzwert, der eine Rückschaltung veranlaßt.

Wünscht der Fahrer beispielsweise ausgehend von einem mittleren Drehzahlbereich durch Vollaststellung des Fahrpedals eine große Beschleunigung des Fahrzeuges, so wird dieser Fahrerwunsch in einen entsprechend großen Wert des Sollwertes des Abtriebsmomentes umgesetzt. Dies löst wie oben dargestellt eine Rückschaltung der momentan eingenommenen Gangstufe in eine tiefere, ggf. auch ein Öffnung der Wandlerkupplung, aus.

Bei dieser vorteilhaften Vorgehensweise wurde die Strategie verfolgt, daß zur Erzielung eines gewünschten Abtriebsmoments bevorzugt eine Getrieberückschaltung erfolgt, danach, zur weiteren Drehmomentsteigerung eine Öffnung der Wandlerkupplung vorgesehen ist. In anderen Ausführungsbeispielen kann jedoch auch umgekehrt vorgegangen werden.

Im Funktionsblock 226 wird der Sollwert des Abtriebsmoments unter Berücksichtigung der tatsächlichen Getriebeübersetzung (gᵢₛₜ) und dem tatsächlichen Schaltzustand der Wandlerkupplung (wkᵢₛₜ)in einen Sollwert für das Kupplungsmoment (mkupₛₒₗₗ), d.h. das Motormoment umgesetzt, der an das Element 24 "Motor" abgegeben wird.

Der Sollwert des Kupplungsmomentes wird gemäß einer Formel aus dem Sollwert des Abtriebsmoments, der Getriebeübersetzung, und einer vom Zustand des Wandlers abhängigen Funktion, die im wesentlichen die Getriebeübersetzung, die Ein- und Ausgangsdrehzahlen des Wandlers, d.h. dessen Übersetzung und die Umdrehungsgeschwindigkeit Vₙ des Wandlers, berücksichtigt.

Die beiden beschriebenen Maßnahmen spielen bei der Darstellung des Abtriebssollmoments zusammen. Wünscht der Fahrer eine starke Beschleunigung, so wird eine Rückschaltung des Getriebes und, wenn die gewünschte Übersetzung eingestellt ist, eine entsprechende Anpassung des Sollkupplungsmomentes durchgeführt. Damit wird ein optimal dosierbares Beschleunigungsverhalten (ohne Momentsprünge) realisiert.

Der Sollwert für das Kupplungsmoment wird an das Element 24 "Motor" übermittelt, das das geforderte Kupplungsmoment durch entsprechende Beeinflussung von Füllung, Kraftstoffmenge und/oder Zündung einstellt.

In einem einfachen Ausführungsbeispiel wird dabei unter Einbeziehung der Motortemperatur und ggf. einem Lambdawert wie folgt vorgegangen. Aus dem bestimmten Kupplungssollmoment wird im Funktionsblock 242 ein Sollwert für die vom Motor einzustellende Last (tlₛₒₗₗ₁) aus einem Kupplungsmoment-Drehzahl-Kennfeld bestimmt. Prinzipiell nimmt der Lastsollwert für einen bestimmten Drehzahlwert mit steigendem Sollmoment in etwa linear zu, wobei bei Kupplungssollmoment 0 ein Grundbetrag des Sollastwert zur Überwindung der Reibung des Motors vorhanden ist. Mit steigender Drehzahl nimmt der Lastsollwert für einen konstanten Kupplungsmomentsollwert zu, wobei bei der Wahl des Kennfeldes der spezielle Verlauf der Drehmomentenkennlinie des Motors zu berücksichtigen ist. Dies kann dazu führen, daß der drehzahlabhängige Verlauf des Lastsollwertes für ein gewünschtes Motormoment nicht linear steigend, sondern in einem bestimmten Drehzahlbereich, in dem der Motor sein maximales Drehmoment abgibt, die Werte für den Lastsollwert betragsmäßig kleiner sind als in den Randbereichen. In der Regel nimmt der Lastsollwert mit steigendem Motormoment und steigender Drehzahl zu.

Der in dieser Weise im Kennfeld 242 bestimmte Lastsollwert wird an ein Korrekturkennfeld 250 übermittelt, in dem der Lastsollwert abhängig von Motortemperatur (Tmot) und eventuell Gemischzusammensetzung (λ) für einen ständigen Betrieb der Brennkraftmaschine außerhalb λ = 1 korrigiert wird.

Die Korrektur ist derart gestaltet, daß der Korrekturwert für den Sollwert der Last mit steigender Temperatur abnimmt, wobei der Korrekturwert bei der normalen Betriebstemperatur des Motors 0 ist. Analog kann eine Lambda-Korrektur durchgeführt werden, durch die der Lastsollwert (tLₛₒₗₗ) entsprechend der gewünschten Gemischzusammensetzung korrigiert wird.

Der korrigierte Lastsollwert (tLₛₒₗₗ) wird an den Funktionsblock 262 abgegeben, der einem motordrehzahlabhängigen Kennfeld zur Bestimmung eines Sollwertes für die Drosselklappenstellung (αₛₒₗₗ₁) aus Lastsollwert (tLₛₒₗₗ) und Motordrehzahl n entspricht.

Mit steigender Drehzahl bei konstantem Lastsollwert nimmt die Stellung der Drosselklappe zu. Ferner ist das Kennfeld derart gestaltet, daß mit steigendem Lastsollwert bei vorgegebener Drehzahl die Sollstellung der Drosselklappe steigt. Bei der genauen Darstellung des Kennfeldes ist die spezielle Abhängigkeit zwischen Drosselklappenstellung und Motorleistung für den einzelnen Motortyp zu berücksichtigen.

Der so gebildete Sollwert für die Drosselklappenstellung wird in einem Funktionsblock 268 mit einem aus der Differenz zwischen Sollastwert und Istlastwert tLᵢₛₜ gebildeten Korrekturwert [R (tLₛₒₗₗ - tLᵢₛₜ)] korrigiert und der korrigierte Wert (αₛₒₗₗ) an das Element 28 zur Drosselklappeneinstellung abgegeben, die die Drosselklappe beispielsweise in Form einer bekannten Lageregelung einstellt. Die Korrektur der Drosselklappenstellung im Funktionsblock 268 ist dabei derart, daß bei großer Differenz zwischen Soll- und Istwert der Last eine Erhöhung der Sollstellung der Drosselklappe erfolgt. Hier ist ferner eine über die Drosselklappenstellung durchgeführte Leerlaufdrehzahlregelung einzufügen.

Ferner ist im Element 24 ein Funktionsblock 272 vorgesehen, in dem aus Drehzahl und Lastistwert in bekannter Weise aus einem Kennfeld die zuzumessende Kraftstoffmenge (ti) und der einzustellende Zündzeitpunkt (αz) bestimmt wird. Diese beiden Größen werden an die entsprechenden Einstellelemente 30 und 32 für die Kraftstoffmenge und 280 für den Zündzeitpunkt abgegeben. Hier werden durch die üblicherweise vorhandenen λ-Regelungseinflüsse (λ-Sonden-Signal) und Klopfregelungseingriffe (Klopfsensorsignal K) miteinbezogen, die nur bis zu max. einige Prozent das Drehmoment beeinflussen.

Das Realisierungsbeispiel wurde vorstehend anhand eines konventionellen, luftgesteuerten Motors dargestellt. In analoger Weise ist in anderen Ausführungsbeispielen auch die Anwendung des oben dargestellten Prinzips bei kraftstoffgeführten Motoren und bei Dieselbrennkraftmaschinen als auch bei alternativen Antrieben, wie Elektroantrieben, denkbar.

Die Einbeziehung von Lenkungs- und Fahrwerksregelung kann in einfachster Weise dadurch erfolgen, daß der gemessene Lenkwinkel und die gewünschte, vom Fahrer vorgebbare Fahrwerkeinstellung vom Element 12 an die Elemente 14 und 16 abgegeben wird.

Ferner ist anzumerken, daß Informationen über den jeweiligen Betriebszustand eines Elements in der Hierarchie auch von unten nach oben weitergegeben werden können, z.B. wenn das Element 24 das gewünschte Moment nicht bereitstellen kann. Befehlen gehen jedoch ausschließlich von oben nach unten.

## Patentansprüche

1. Elektronisches Steuersystem für Fahrzeuge, mit einer Antriebseinheit und einer Bremseinheit zum Bremsen des Fahrzeugs, wobei die Antriebseinheit aus Motor und Getriebe besteht,
- mit Mitteln (20) zur Steuerung der Bremsanlage,
- mit ersten Mitteln (12, 18), die eine obere Ebene definieren,
- mit zweiten Mitteln (22), die eine mittlere Ebene definieren,
- mit dritten Mitteln (24), die eine untere Ebene definieren,
- wobei die ersten Mittel (12, 18) die Befehle des Fahrers erfassen und erste Sollwerte erzeugen, die den Fahrerbefehlen entsprechen,
- wobei die zweiten Mittel (22) die ersten Sollwerte empfangen und zweite und dritte Sollwerte aus den ersten Sollwerten zur Steuerung von Motor und Getriebe gemäß den Fahrerbefehlen ermitteln und die zweiten Sollwerte an die dritten Mittel (24) übermitteln,
- wobei die dritten Mittel die dritten Sollwerte empfangen und vierte Sollwerte basierend auf den dritten Sollwerten zur Steuerung des Motors gemäß den dritten Sollwerten erzeugen,
- wobei die Sollwerte zwischen den Ebenen nur in einer Richtung übermittelt werden,
dadurch gekennzeichnet,
- daß die ersten Mittel (12, 18) weitere Sollwerte zur Steuerung der Bremsanlage abhängig von den Fahrerbefehlen erzeugen und an die Mittel (20) zur Steuerung der Bremsanlage abgeben
- und daß die ersten Mittel (12, 18) eine Antriebsschlupfregelung umfassen, die die ersten Sollwerte begrenzt.

2. System nach Anspruch 1, dadurch gekennzeichnet, daß die ersten Mittel (18) ein Koordinationselement umfassen, welches die Betätigungsgrade von Fahrpedal und Bremspedal als Fahrerbefehle erfaßt und unter Berücksichtigung wenigstens der Fahrzeuggeschwindigkeit aus diesen Größen einen Abtriebsmomenten-Sollwert (Mab_{Soll}) zur Steuerung des Triebstranges und einen Radmomenten- oder Verzögerungs-Sollwert für die Bremsensteuerung ermittelt.

3. System nach einem der vorhergehenden Ansprüche, dadurch gekennzeichnet, daß die zweiten Mittel (22) ein Koordinationselement umfassen, welchem ein Sollwert für das Abtriebsmoment zugeführt wird und welches unter Berücksichtigung wenigstens der Getriebeeinstellung das gewünschte Abtriebsmoment in einen Sollwert für das Kupplungsmoment und einen für den Getriebezustand (Gₛₒₗₗ, WK_{Soll}) umwandelt.

4. System nach einem der vorhergehenden Ansprüche, dadurch gekennzeichnet, daß die dritten Mittel (24) einen Sollwert für das Kupplungsmoment empfangen und aus diesem Sollwert und Betriebsgrößen des Motors wie Drehzahl, Motortemperatur und Angaszusammensetzung einen Sollwert für die Last des Motors (tLₛₒₗₗ) bilden.

5. System nach Anspruch 4, dadurch gekennzeichnet, daß der Sollwert für die Motorlast unter Berücksichtigung der Motordrehzahl und der Motorlast in einen Sollwert für die Stellung einer Drosselklappe umgesetzt wird, auf den die Drosselklappe eingestellt wird.

6. System nach einem der vorhergehenden Ansprüche, dadurch gekennzeichnet, daß eine oberste Hierarchieebene ein Koordinationselement (12) umfaßt, welchem die Betätigungssignale des Fahrers von einem Fahrpedal, einem Bremspedal und einem Lenkrad zugeführt wird, diese Signale in Sollwerte für die Radlasten und Lenkwinkel und gegebenenfalls die Giergeschwindigkeit umgesetzt werden, die durch Steuerelemente (14, 16) zur Einstellung von Lenkung und Fahrwerk eingestellt werden.

7. System nach einem der vorhergehenden Ansprüche, dadurch gekennzeichnet, daß Steuereinheiten (120, 106, 108) zur Steuerung von Bremse, Getriebe und Motor vorgesehen sind, die an wenigstens einem Bussystem (104, 118) angebunden sind, welches sie mit einem Master Controller (100) verbindet, der wenigstens eines der Mittel (12, 18, 22, 24) enthält.

8. System nach einem der vorhergehenden Ansprüche, dadurch gekennzeichnet, daß ein Sollwert für die Beschleunigung des Fahrzeugs abhängig von der Fahrpedalstellung, der Fahrgeschwindigkeit und der Bremspedalbetätigung durch ein Kennfeld ermittelt wird.

9. System nach Anspruch 8, dadurch gekennzeichnet, daß die Sollbeschleunigung unter Berücksichtigung der Fahrgeschwindigkeit, der Ist-Beschleunigung und gegebenenfalls einer ASR-Begrenzung in einen Sollwert für das Antriebsmoment umgewandelt wird.

## Claims

1. Electronic control System for vehicles, having a drive unit and a brake unit for braking the vehicle, the drive unit comprising engine and gearbox,
- having means (20) for controlling the brake system,
- having first means (12, 18) which define an upper level,
- having second means (22) which define a medium level,
- having third means (24) which define a lower level,
- the first means (12, 18) detecting the instructions of the driver and generating first desired values which correspond to the driver instructions
- the second means (22) receiving the first desired values and determining second and third desired values from the first desired values in order to control engine and gearbox in accordance with the driver instructions, and transmitting the second desired values to the third means (24),
- the third means receiving the third desired values and generating fourth desired values on the basis of the third desired values in order to control the engine in accordance with the third desired values,
- the desired values being transmitted between the levels in one direction only,
characterized
- in that the first means (12, 18) generate further desired values in order to control the brake system as a function of the driver instructions, and transmit them to the means (20) for controlling the brake system
- and in that the first means (12, 18) comprise a traction control system which limits the first desired values.

2. System according to Claim 1, characterized in that the first means (18) comprise a coordination element which detects the degrees of actuation of accelerator pedal and brake pedal as driver instructions and, taking into account at least the speed of the vehicle, determines from these variables a desired value (Mab_{Soll}) for the output torque for controlling the drive train and a desired value for the wheel torque or deceleration for controlling the brakes.

3. System according to one of the preceding claims, characterized in that the second means (22) comprise a coordination element to which a desired value for the output torque is fed and which, taking into account at least the gearbox setting, converts the desired output torque into a desired value for the clutch torque and a desired value for the gearbox state (G_{Soll}, WK_{Soll}).

4. System according to one of the preceding claims, characterized in that the third means (24) receive a desired value for the clutch torque and form from this desired value and operating variables of the engine, such as engine speed, engine temperature and exhaust-gas composition, the desired value for the engine load (tL_{Soll}).

5. System according to Claim 4, characterized in that, taking into account the engine speed and the engine load, the desired value for the engine load is converted into a desired value for the setting of a throttle valve, to which the throttle valve is set.

6. System according to one of the preceding claims, characterized in that a top hierarchy level comprises a coordination element (12) to which the actuation signals of the driver are fed from an accelerator pedal, a brake pedal and a steering wheel, these signals are converted into desired values for the wheel loads and steering angles and, if appropriate, the yaw velocity, which desired values are set by control elements (14, 16) for setting the steering and running gear.

7. System according to one of the preceding claims, characterized in that control units (120, 106, 108) for controlling brake, gearbox and engine are provided, which control units (120, 106, 108) are connected to at least one bus system (104, 118) which connects them to a master controller (100) which contains at least one of the means (12, 18, 22, 24).

8. System according to one of the preceding claims, characterized in that a desired value for the acceleration of the vehicle as a function of the position of the accelerator pedal, the travelling speed and the actuation of the brake pedal is determined by a characteristic diagram.

9. System according to Claim, 8, characterized in that the desired acceleration is converted into a desired value for the output torque, taking into account the travelling speed, the actual acceleration and, if appropriate, a TCS limitation.

## Revendications

1. Système de commande électronique pour véhicule comprenant :
• une unité motrice et un système de freinage pour freiner le véhicule, une unité motrice se composant du moteur et de la transmission,
• des moyens (20) pour commander l'installation de frein,
• des premiers moyens (12, 18) définissant un plan supérieur,
• des seconds moyens (22) définissant un plan moyen,
• des troisièmes moyens (24) définissant un plan inférieur,
• des premiers moyens (12, 18) détectant les ordres du conducteur et générant les premières valeurs de consigne correspondant aux ordres du conducteur,
• des seconds moyens (22) recevant les premières valeurs de consigne et déterminant des secondes et troisièmes valeurs de consigne à partir des premières valeurs de consigne pour commander le moteur et la transmission selon les ordres du conducteur et transmettant les secondes valeurs de consigne aux troisièmes moyens (24),
• les troisièmes moyens recevant les troisièmes valeurs de consigne, et les quatrièmes valeurs de consigne reposant sur les troisièmes valeurs de consigne pour commander le moteur selon les troisièmes valeurs de consigne,
• les valeurs de consigne étant transmises entre les plans seulement dans une direction,
caractérisé en ce que
• les premiers moyens (12, 18) génèrent d'autres valeurs de consigne pour commander l'installation de freins en fonction des ordres du conducteur et les fournissant à des moyens (20) pour commander l'installation de freins,
• et les premiers moyens (12, 18) comprennent un système de régulation antipatinage limitant les premières valeurs de consigne.

2. Système selon la revendication 1,
caractérisé en ce que
les premiers moyens (18) comprennent un élément de coordination qui détecte le degré d'actionnement de la pédale d'accélérateur et de la pédale de frein comme des ordres du conducteur et en tenant compte d'au moins la vitesse du véhicule ils forment à partir de ces grandeurs une valeur de consigne de couple de sortie (Mab_{cons}) pour commander la ligne de transmission et une valeur de consigne du couple de roue ou de décélération pour la commande de frein.

3. Système selon l'une des revendications précédentes,
caractérisé en ce que
les seconds moyens (22) comprennent un élément de coordination qui reçoit une valeur de consigne du couple de sortie et qui en tenant compte au moins de la position de la transmission, convertit le couple de sortie souhaité en une valeur de consigne du couple d'embrayage et une valeur de consigne pour l'état de la transmission (g_{cons}, WK_{cons}).

4. Système selon l'une quelconque des revendications précédentes,
caractérisé en ce que
les troisièmes moyens (24) reçoivent une valeur de consigne du couple d'embrayage et forment à partir de cette valeur de consigne et les paramètres du moteur tels que la vitesse de rotation, la température du moteur et la composition des gaz d'échappement, une valeur de consigne de la charge du moteur (tL_{cons}).

5. Système selon la revendication 4,
caractérisé en ce que
la valeur de consigne de la charge du moteur est convertie en tenant compte de la vitesse de rotation du moteur et de la charge du moteur en une valeur de consigne pour le réglage d'un volet d'étranglement. Le volet est réglé avec cette valeur.

6. Système selon l'une quelconque des revendications précédentes,
caractérisé en ce qu'
un plan hiérarchique supérieur comprend un élément de coordination (12) recevant les signaux d'actionnement du conducteur d'une pédale d'accélérateur, une pédale de frein et d'un volant, ces signaux étant convertis en des valeurs de consigne pour les charges de roues et l'angle de braquage et le cas échéant la vitesse de lacet, qui sont réglés par l'élément de commande (14, 16) pour régler la direction et la suspension.

7. Système selon l'une des revendications précédentes,
caractérisé par
des unités de commande (120, 106, 108) pour commander les freins, la transmission et le moteur, ces unités sont au moins reliées à un système de bus (104, 118) qui les relie à un contrôleur principal (100) comportant au moins l'un des moyens (12, 18, 22, 24).

8. Système selon l'une des revendications précédentes,
caractérisé en ce qu'
il détermine une valeur de consigne de l'accélération du véhicule en fonction de la position de la pédale d'accélérateur, de la vitesse du véhicule et de l'actionnement de la pédale de frein à l'aide d'un champ de caractéristiques.

9. Système selon la revendication 8,
caractérisé en ce que
l'accélération de consigne est convertie en une valeur de consigne du couple de sortie en tenant compte de la vitesse du véhicule, de l'accélération réelle et le cas échéant d'une limitation (ASR).
